(19) Europäisches Patentamt

European Patent Office

Office européen des brevets

(11) **EP 1 228 393 B1**

(12) **FASCICULE DE BREVET EUROPEEN**

(45) Date de publication et mention
de la délivrance du brevet:
**02.04.2003 Bulletin 2003/14**

(51) Int Cl.⁷: **G02F 1/00**

(21) Numéro de dépôt: **00969655.0**

(22) Date de dépôt: **20.10.2000**

(86) Numéro de dépôt international:
**PCT/FR00/02921**

(87) Numéro de publication internationale:
**WO 01/029610 (26.04.2001 Gazette 2001/17)**

(54) **DISPOSITIF POUR LE CONTROLE D'UNE FREQUENCE DE MODULATION D'UN SIGNAL OPTIQUE, ET EN PARTICULIER POUR LE CONTROLE D'UNE FREQUENCE DE MODULATION MICRO-ONDES OU MILLIMETRIQUE**

VORRICHTUNG ZUR REGELUNG DER MODULATIONSFREQUENZ EINES OPTISCHEN SIGNALS, SOWIE INSBESONDERE ZUR REGELUNG EINER MODULATIONSFREQUENZ IM MIKROWELLEN ODER MILLIMETERBEREICH

DEVICE FOR CONTROLLING AN OPTICAL SIGNAL MODULATION FREQUENCY, AND IN PARTICULAR FOR CONTROLLING MICROWAVE OR MILLIMETRIC MODULATION FREQUENCY

(84) Etats contractants désignés:
**DE GB IT**

(30) Priorité: **21.10.1999 FR 9913131**

(43) Date de publication de la demande:
**07.08.2002 Bulletin 2002/32**

(73) Titulaire: **FRANCE TELECOM**
**75015 Paris (FR)**

(72) Inventeurs:
  • **HERVE, Didier**
    **F-29290 Saint Renant (FR)**
  • **COQUILLE, René**
    **F22300 Lannion (FR)**
  • **CADIOU, Jean-François**
    **F-22560 Trebeurden (FR)**

(74) Mandataire: **Callon de Lamarck, Jean-Robert et al**
**Cabinet Régimbeau**
**20, rue de Chazelles**
**75847 Paris cedex 17 (FR)**

(56) Documents cités:
  FR-A- 2 739 508          US-A- 5 025 488
  US-A- 5 717 516

  • CLEMENT A E ET AL: "DETERMINATION OF THE EFFECTIVE TRAP DENSITY OF TA:KNBO3 AND BATIO3 AT 823 NM USING THE SHALLOW TRAP MODEL" OPTICS AND LASER TECHNOLOGY,NL,ELSEVIER SCIENCE PUBLISHERS BV., AMSTERDAM, vol. 25, no. 5, 1 octobre 1993 (1993-10-01), pages 299-303, XP000399860 ISSN: 0030-3992
  • STRAIT J ET AL: "NET GAIN IN PHOTOREFRACTIVE INP:FE AT =1.32 UM WITHOUT AN APPLIED FIELD" APPLIED PHYSICS LETTERS,US,AMERICAN INSTITUTE OF PHYSICS. NEW YORK, vol. 57, no. 10, 3 septembre 1990 (1990-09-03), pages 951-953, XP000164513 ISSN: 0003-6951
  • MCCORMACK S ET AL: "POWERFUL, DIFFRACTION-LIMITED SEMICONDUCTOR LASER USING PHOTOREFRACTIVE BEAM COUPLING" OPTICS LETTERS,US,OPTICAL SOCIETY OF AMERICA, WASHINGTON, vol. 22, no. 4, 15 février 1997 (1997-02-15), pages 227-229, XP000684435 ISSN: 0146-9592

**EP 1 228 393 B1**

## Description

La présente invention est relative à un dispositif pour le contrôle d'une fréquence de modulation d'un signal optique, et en particulier à un dispositif pour le contrôle d'une fréquence de modulation micro-ondes ou millimétrique.

On sait qu'il a déjà été proposé des systèmes de transmission hybrides utilisant des fibres optiques pour transmettre des signaux qui sont modulés à des fréquences habituellement utilisées pour des transmissions dans le domaine hertzien, c'est à dire principalement des fréquences micro-ondes ou millimétriques.

On pourra par exemple à cet égard se référer aux deux publications suivantes :

- J.F. Cadiou, D. Tanguy, E. Penard, P ; Jaffré, H. Schmuck, E. Vergnol, D. Mathoorasing, « Hybrid fiber-radio systems in the mm-wave range: A comparison between available optical sources », International Topical Meeting on Microwave Photonics, 5MWP'98), Princeton, N.J., pp.59-62, 1998 ;
- E. Vergnol, F. Devaux, D. Tanguy, E. Penard, « Integrated lightwave millimetric single side-band source : Design and issues », Journal of Lightwave Technology, Vol. 16, n°7, pp. 1276-1284, 1998.

L'une des principales difficultés rencontrées avec de tels systèmes hybrides tient en ce qu'ils nécessitent de pouvoir stabiliser dans le temps l'oscillateur qui module le signal optique.

Les dérives de fréquence de modulation doivent en effet être empêchées de façon à éviter toute interférence entres les différentes porteuses.

Un but de l'invention est donc de proposer un dispositif permettant le contrôle d'une fréquence de modulation d'un signal optique, et en particulier d'une fréquence de modulation micro-ondes ou millimétrique.

On connaît depuis longtemps des filtres optiques à cristal photoréfractif.

Leur principe est le suivant.

Lorsqu'on envoie sur un cristal photoréfractif correctement orienté d'une part un signal optique d'écriture à une longueur d'onde $\lambda_e$ donnée et d'autre part un signal optique à filtrer, il se crée sur le cristal un réseau holographique qui réfléchit le signal à filtrer à une longueur d'onde de filtrage $\lambda_f$ telle que :

$$\lambda_f = \lambda_e (1 - [\sin (\alpha) / n]^2)^{1/2}$$

où n est l'indice de réfraction du cristal et où $\alpha$ est l'angle entre le signal optique de commande et le signal optique à filtrer.

Un filtre optique à cristal photoréfractif de ce type a en particulier été décrit dans la demande de brevet français de la demanderesse publiée sous le numéro 2.739.508.

L'invention propose quant à elle un dispositif pour le contrôle d'une fréquence de modulation d'un signal optique - notamment un dispositif pour le contrôle de la fréquence de modulation d'un signal optique modulé à une fréquence micro-ondes ou millimétrique - qui comporte un cristal photoréfractif, un photodétecteur, des moyens pour envoyer sur ledit cristal d'une part au moins une partie du signal optique modulé et d'autre part un signal optique d'écriture pour la photoinscription d'un réseau de Bragg sur ledit cristal, les orientations du signal optique modulé et du signal optique d'écriture par rapport audit cristal étant telles que, pour une longueur d'onde de signal optique donnée, le photodétecteur détecte une intensité de signal réfléchi par le cristal qui atteint un maximum lorsque le signal optique est modulé à la fréquence de modulation à détecter.

Avantageusement, le dispositif comporte des moyens pour dériver le signal optique d'écriture du signal optique modulé.

Notamment, le signal optique d'écriture est préférentiellement une portion du signal optique modulé.

L'invention propose également un dispositif pour le contrôle de la fréquence d'un oscillateur dont le signal de sortie est utilisé pour moduler un signal optique. Ce dispositif comporte une boucle d'asservissement qui comporte :

- d'une part un dispositif de contrôle du type précité recevant en entrée au moins une partie du signal optique modulé par l'oscillateur, et
- d'autre part des moyens qui corrigent la fréquence de l'oscillateur en fonction du signal en sortie du photodétecteur dudit dispositif de contrôle.

Elle propose en outre un système de transmission hybride comportant des moyens d'émission, des moyens de modulation du signal en sortie des moyens d'émission, un oscillateur pour la génération d'un signal de fréquence micro-onde ou millimétrique pour la commande des moyens de modulation, une ligne à fibre optique par laquelle le signal modulé est transmis. Ce système comporte un dispositif du type précité pour le contrôle de la fréquence de l'oscillateur.

L'invention propose également un système pour le contrôle d'une fréquence de modulation d'un signal optique, caractérisé en ce qu'il comporte deux dispositifs de contrôle du type de ceux précités, centrés respectivement sur des fréquences de contrôle de part et d'autre de la fréquence de modulation que le système doit contrôler et en ce qu'il comporte également un amplificateur différentiel sur les entrées duquel les sorties des photodétecteurs des deux dispositifs de contrôle sont injectées.

Elle propose en outre un système de transmission hybride comportant des moyens d'émission, des moyens de modulation du signal en sortie des moyens d'émission, un oscillateur pour la génération d'un signal de fréquence micro-onde ou millimétrique pour la commande des moyens de modulation, une ligne à fibre optique pour laquelle le signal modulé est transmis, caractérisé en ce qu'il comporte un système du type précité pour le contrôle de la fréquence de l'oscillateur.

D'autres caractéristiques et avantages de l'invention ressortiront encore de la description qui suit. Cette description est purement illustrative et non limitative. Elle doit être lue en regard des dessins annexés sur lesquels :

- la figure 1 est une représentation schématique illustrant le principe d'un dispositif de détection conforme à un mode de réalisation particulier de l'invention ;
- la figure 2 est un graphe sur lequel on a porté l'allure de l'intensité du signal électrique en sortie du photodétecteur du dispositif de la figure 1 en fonction de la fréquence de modulation,
- la figure 3 est une représentation schématique illustrant le principe d'un système comportant une source optique stabilisée en fréquence au moyen d'un dispositif conforme à un mode de réalisation possible de l'invention.

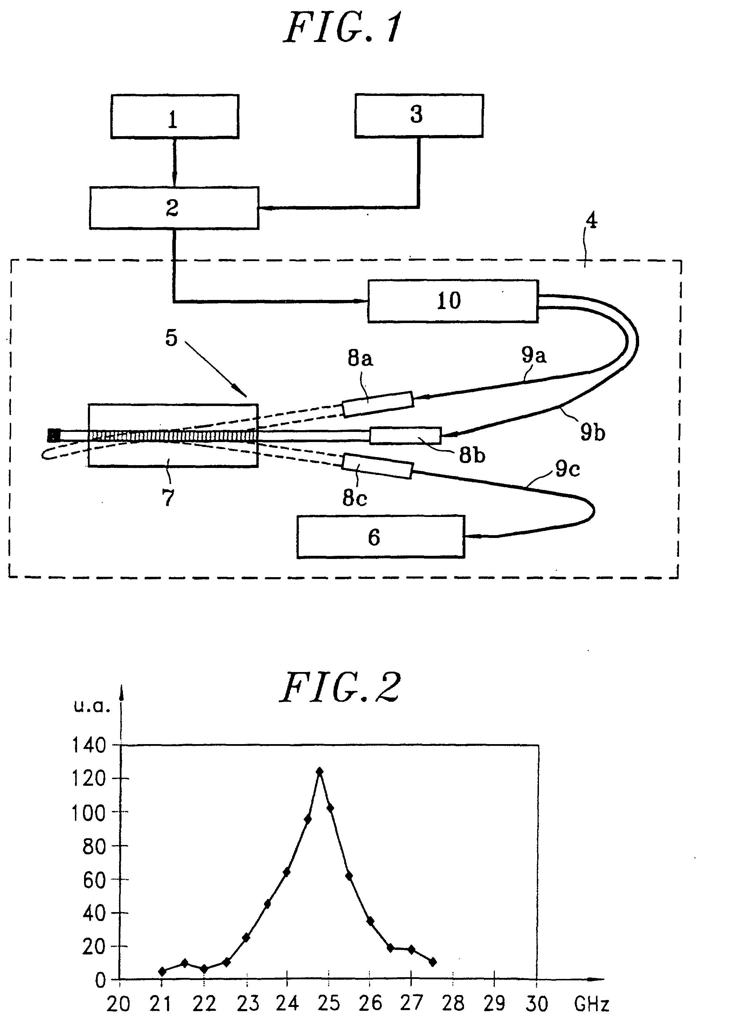

Sur la figure 1, on a représenté une diode laser 1, un modulateur 2 qui module le signal optique en sortie de ladite diode 1, un générateur de fréquence 3 qui commande le modulateur 2, ainsi qu'un dispositif 4 pour le contrôle de la fréquence de modulation du signal en sortie du modulateur 2.

A titre d'exemple, la diode laser peut être une diode émettant à la longueur d'onde de 1 543 nm ; le modulateur 2 est un modulateur de type Mach-Zehnder ; le générateur 3 génère une fréquence variable comprise entre 21 GHz et 27 GHz.

Le dispositif 4 comporte des moyens de filtrage 5 du type à cristal photoréfractif et un photodétecteur 6 sur lequel le signal filtré réfléchi par lesdits moyens de filtrage 5 est envoyé.

Ces moyens de filtrage 5 sont par exemple du type de ceux décrits dans la demande de brevet FR 2.739.508, à laquelle on pourra avantageusement se référer.

Ils comportent un cristal photoréfractif 7 et trois collimateurs fibrés 8a, 8b, 8c qui sont figés par rapport au cristal photoréfractif 7 et qui sont respectivement reliés à une fibre optique 9a qui permet d'envoyer le signal optique à filtrer sur le cristal 7 (collimateur 8a), à une fibre optique 9b qui permet d'envoyer sur ledit cristal le signal optique d'écriture (collimateur 8b) et à une fibre optique 9c par laquelle le signal filtré réfléchi par le cristal est envoyé sur le photodétecteur 6 (collimateur 8c).

En l'occurrence, le signal optique d'écriture transmis par la fibre 9b est le même que le signal optique à filtrer transmis par la fibre 9a, le dispositif 4 de contrôle comportant un coupleur 10 permettant de coupler le signal optique dont la fréquence de modulation est à contrôler dans chacune des deux fibres 9a et 9b.

Ainsi, le dispositif 4 de contrôle de fréquence présente l'avantage de ne nécessiter aucune source optique de référence et de ne pas nécessiter non plus de moyens pour séparer les différentes raies du spectre du signal à filtrer, qui rendrait sa structure complexe et moins souple d'emploi.

On notera que l'utilisation comme signal d'écriture du signal optique dont la fréquence est à contrôler crée sur le cristal 7 au moins deux réseaux de Bragg holographiques, mais que ceci n'affecte pas de façon importante les caractéristiques du filtre, notamment pour l'application visée.

Le cristal photoréfractif 7 est préférentiellement un cristal de phosphure d'indium dopé au fer (InP: Fe). Ce cristal est par exemple d'une longueur de 18 mm, d'une largeur de 10 mm, d'une épaisseur de 1mm et d'une orientation <001>.

D'autres cristaux photoréfractifs peuvent bien entendu être envisagés.

Pour un angle $\alpha$ de 3° d'une part entre les collimateurs 8a et 8b - c'est à dire entre le signal optique à filtrer et le signal optique d'écriture - et d'autre part entre les collimateurs 8b et 8c - c'est à dire entre le signal optique d'écriture et le signal réfléchi, l'intensité du signal électrique en sortie du photodétecteur 6 a, en fonction de la fréquence de modulation, l'allure représentée sur la figure 2.

Cette intensité est maximale pour une fréquence de modulation de 24,8 GHz (une telle modulation génère en effet en longueur d'onde un décalage de 0,2 nm par rapport à une longueur d'onde d'émission de 1,55 μm) et pratiquement nulle en dessous de 22 GHz et au dessus de 27 GHz.

Ainsi, le dispositif 4 permet de contrôler de façon particulièrement sélective la fréquence de modulation d'un signal optique, la fréquence contrôlée étant bien entendu fonction de l'angle $\alpha$ entre la portion de signal qui sert de signal optique d'écriture et la portion de signal qui joue le rôle de signal optique à filtrer.

On notera toutefois que l'angle entre les collimateurs 8b et 8c n'a pas besoin d'être figé avec une aussi grande précision que l'angle entre les collimateurs 8a et 8b.

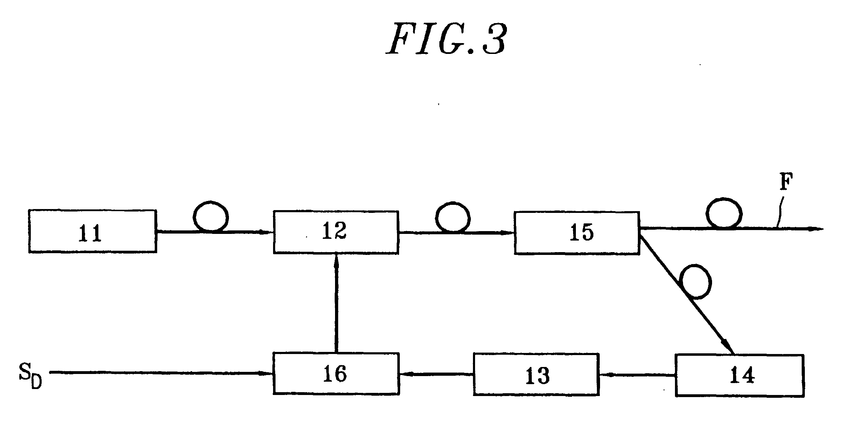

Ainsi que l'illustre la figure 3, un dispositif 4 du type de celui qui vient d'être décrit en référence aux figures 1 et 2 est avantageusement intégré dans une boucle d'asservissement d'un oscillateur générant une fréquence utilisée pour moduler un signal optique, notamment dans un système de transmission hybride.

Le système de transmission représenté sur cette figure 3 comporte :

- une diode laser 11,
- un modulateur 12 qui module en amplitude le signal optique en sortie de ladite diode 11,
- un oscillateur 13 qui génère un signal électrique micro-ondes ou millimétrique,

- un dispositif de contrôle 14 qui est similaire au dispositif de contrôle 4 décrit en référence aux figures 1 et 2 et dont le signal en sortie de son photodétecteur est envoyé sur un circuit en entrée de l'oscillateur 13 qui corrige la fréquence d'oscillation dudit oscillateur en fonction dudit signal,
- un coupleur 15 qui envoie le signal optique en sortie du modulateur 12 sur une fibre optique F qui assure une transmission, par exemple vers une unité émettrice, et qui prélève une partie de ce signal pour l'envoyer sur le dispositif de contrôle 14,
- un modulateur de phase 16 qui reçoit par exemple en entrée un signal binaire correspondant à des données codées et qui module en phase le signal électrique généré par l'oscillateur 13, le signal électrique ainsi modulé en phase commandant le modulateur 12.

Dans le cas d'une modulation à double bande latérale ("DSB" ou « Double side band » selon la terminologie anglo-saxonne généralement utilisée par l'homme du métier), l'angle $\alpha$ des moyens de filtrage est choisi de façon à ce que lesdits moyens de filtrage puissent détecter l'écart fréquentiel entre la bande latérale inférieure et la porteuse, ainsi que l'écart fréquentiel entre la porteuse et la bande latérale supérieure. On notera que ces deux écarts sont identiques, mais correspondent à deux réseaux de Bragg distincts sur le cristal.

Dans le cas d'une bande latérale unique, un seul accord de Bragg a lieu et l'angle $\alpha$ des moyens de filtrage est choisi en fonction de l'écart entre la raie latérale et la porteuse.

D'autres variantes de réalisation que celle qui ont été décrites ci-dessus sont encore envisageables.

Notamment, un système de contrôle de fréquence de modulation comprend avantageusement deux dispositifs de contrôle du type de ceux qui viennent d'être décrits, centrés sur une fréquence de détection décalée de part et d'autre de la fréquence de détection du système dont ces dispositifs font partie.

Par exemple, pour une fréquence de détection de 25 GHz pour le système de contrôle, les deux dispositifs de contrôle qu'il comporte sont centrés l'un sur 24 GHz, l'autre sur 26 GHz. Les sorties des photodétecteurs de ces deux dispositifs sont respectivement injectées sur les deux entrées d'un amplificateur différentiel. Le signal en sortie de l'amplificateur différentiel est facilement utilisable dans une boucle de réaction pour asservir un oscillateur sur la fréquence centrale du système de contrôle. Une telle structure a l'avantage de simplifier l'électronique de la boucle de réaction.

## Revendications

1. Dispositif pour le contrôle d'une fréquence de modulation d'un signal optique comportant un cristal (7) photoréfractif, un photodétecteur (6), des moyens (8a, 8b, 8c ; 9a, 9b, 9c) pour envoyer sur ledit cristal (7) d'une part au moins une partie du signal optique modulé et d'autre part un signal optique d'écriture pour la photoinscription d'un réseau de Bragg sur ledit cristal (7), les orientations du signal optique modulé et du signal optique d'écriture par rapport audit cristal (7) étant telles que, pour une longueur d'onde de signal optique donnée, le photodétecteur (6) détecte une intensité de signal réfléchi par le cristal (7) qui atteint un maximum lorsque le signal optique est modulé à la fréquence de modulation à détecter.

2. Dispositif selon la revendication 1, comportant des moyens (10) pour dériver le signal optique d'écriture du signal optique modulé.

3. Dispositif selon la revendication 2, où le signal optique d'écriture est une portion du signal optique modulé.

4. Dispositif selon l'une des revendications précédentes, comportant trois collimateurs fibrés (8a, 8b, 8c) qui sont figés par rapport audit cristal (7) et qui sont respectivement reliés l'un à une fibre optique par laquelle une partie du signal optique modulé est envoyée sur le cristal (7), un autre à une fibre optique par laquelle le signal optique d'écriture est envoyée sur le cristal (7), le troisième à une fibre optique par laquelle le signal filtré réfléchi par le cristal (7) est envoyé sur le photodétecteur (6).

5. Dispositif selon l'une des revendications précédentes, où le cristal (7) est un cristal d'InP : Fe.

6. Dispositif pour le contrôle de la fréquence de modulation d'un signal optique modulé à une fréquence micro-ondes ou millimétrique constitué par un dispositif selon l'une des revendications précédentes.

7. Dispositif pour le contrôle de la fréquence d'un oscillateur dont le signal de sortie est utilisé pour moduler un signal optique comportant une boucle d'asservissement qui comporte

- d'une part un dispositif de contrôle (4) selon l'une des revendications précédentes recevant en entrée au moins une partie du signal optique modulé par l'oscillateur (13), et
- d'autre part des moyens qui corrigent la fréquence de l'oscillateur en fonction du signal en sortie du photodétecteur (6) dudit dispositif de contrôle.

8. Système de transmission hybride comportant des moyens d'émission (11), des moyens (12) de modulation du signal en sortie des moyens d'émission (11), un oscillateur (13) pour la génération d'un signal de fréquence micro-onde ou millimétrique pour la commande des moyens de modulation (12), une ligne à fibre optique par laquelle le signal modulé est transmis, comportant un dispositif (4) selon la revendication 7 pour le contrôle de la fréquence de l'oscillateur (13).

9. Système pour le contrôle de la fréquence de modulation d'un signal optique, comportant deux dispositifs de contrôle selon l'une des revendications 1 à 7, centrés respectivement sur des fréquences de contrôle de part et d'autre de la fréquence de modulation que le système doit contrôler et comportant également un amplificateur différentiel sur les entrées duquel les sorties des photodétecteurs des deux dispositifs de contrôle sont injectées.

10. Système de transmission hybride comportant des moyens d'émission, des moyens de modulation du signal en sortie des moyens d'émission, un oscillateur pour la génération d'un signal de fréquence micro-onde ou millimétrique pour la commande des moyens de modulation, une ligne à fibre optique par laquelle le signal modulé est transmis, comportant un système selon la revendication 9 pour le contrôle de la fréquence de l'oscillateur.

**Claims**

1. A monitor device for monitoring a modulation frequency of an optical signal, the device comprising a photorefractive crystal (7), a photodetector (6), and means (8a, 8b, 8c; 9a, 9b, 9c) for applying to said crystal (7) firstly at least a fraction of the modulated optical signal and secondly a write optical signal for photoinducing a Bragg grating on said crystal (7), the orientations of the modulated optical signal and of the write optical signal relative to said crystal (7) being such that at a given wavelength of the optical signal the photodetector (6) detects an intensity for the signal reflected by the crystal (7) that reaches a maximum when the optical signal is modulated at the modulation frequency to be detected.

2. A device according to claim 1, including means (10) for deriving the write optical signal from the modulated optical signal.

3. A device according to claim 2, in which the write optical signal is a portion of the modulated optical signal.

4. A device according to any preceding claim, having three fiber collimators (8a, 8b, 8c) which are fixed in position relative to said crystal (7) and which are connected respectively one to an optical fiber whereby a portion of the modulated optical signal is applied to the crystal (7), another to an optical fiber whereby the write optical signal is applied to the crystal (7), and the third to an optical fiber whereby the filtered signal as reflected by the crystal (7) is delivered to the photodetector (6).

5. A device according to any preceding claim, in which the crystal (7) is a crystal of InP:Fe.

6. A device for monitoring the modulation frequency of an optical signal modulated at a microwave or millimetric frequency, and constituted by a device according to any preceding claim.

7. A device for monitoring the frequency of an oscillator whose output signal is used for modulating an optical signal, the device being comprising a servo-control loop which comprises:

    - firstly a monitor device (4) according to any preceding claim receiving as input at least a portion of the optical signal modulated by the oscillator (13); and
    - secondly means for correcting the frequency of the oscillator as a function of the output signal from the photodetector (6) of said monitor device.

8. A hybrid transmission system comprising emitter means (11), modulator means (12) for modulating the signal output by the emitter means (11), an oscillator (13) for generating a microwave or millimetric frequency signal for controlling the modulator means (12), and an optical fiber line on which the modulated signal is transmitted, the system further comprising a device according to claim 7 for controlling the frequency of the oscillator (13).

9. A system for controlling the modulation frequency of an optical signal, the system comprising two monitor devices according to any one of claims 1 to 7, centered on respective monitoring frequencies on either side of the modulation frequency that the system is to control, and also comprising a differential amplifier on whose inputs the outputs from the photodetectors of the two monitor devices are injected.

10. A hybrid transmission system comprising emitter means, modulator means for modulating the signal output by the emitter means, an oscillator for generating a microwave or millimetric frequency signal for controlling the modulator means, and an optical fiber line over which the modulated signal is transmitted, the system further comprising a system according to claim 9 for controlling the frequency of the oscillator.

**Patentansprüche**

1. Vorrichtung für die Steuerung einer Modulationsfrequenz eines optischen Signals, die einen photorefraktiven Kristall (7), einen Photodetektor (6), Mittel (8a, 8b, 8c; 9a, 9b, 9c) zum Senden auf den Kristall (7) einerseits wenigstens eines Teils des modulierten optischen Signals und andererseits eines optischen Schreibsignals für die Lichteinschreibung eines Bragg-Gitters auf den Kristall (7) umfaßt, wobei die Orientierungen des modulierten optischen Signals und des optischen Schreibsignals bezüglich des Kristalls (7) derart sind, daß für eine vorgegebene Wellenlänge des optischen Signals der Photodetektor (6) eine vom Kristall (7) reflektierte Signalintensität detektiert, die ein Maximum annimmt, wenn das optische Signal mit der zu detektierenden Modulationsfrequenz moduliert ist.

2. Vorrichtung nach Anspruch 1, die Mittel (10) zum Ableiten des optischen Schreibsignals aus dem modulierten optischen Signal umfaßt.

3. Vorrichtung nach Anspruch 2, bei der das optische Schreibsignal ein Teil des modulierten optischen Signals ist.

4. Vorrichtung nach einem der vorhergehenden Ansprüche, die drei Faserkollimatoren (8a, 8b, 8c) umfaßt, die bezüglich des Kristalls (7) festgelegt sind, und von denen einer mit einer optischen Faser verbunden ist, über die ein Teil des modulierten optischen Signals an den Kristall (7) gesendet wird, und ein anderer mit einer optischen Faser, über die das optische Schreibsignal an den Kristall (7) gesendet wird, und der dritte mit einer optischen Faser, über die das vom Kristall (7) reflektierte gefilterte Signal an den Photodetektor (6) gesendet wird.

5. Vorrichtung nach einem der vorhergehenden Ansprüche, bei der der Kristall (7) ein InP:Fe-Kristall ist.

6. Vorrichtung zum Steuern der Modulationsfrequenz eines mit einer Mikrowellen- oder Millimeterfrequenz modulierten optischen Signals, die durch eine Vorrichtung nach einem der vorhergehenden Ansprüche gebildet ist.

7. Vorrichtung zum Steuern der Frequenz eines Oszillators, dessen Ausgangssignal zum Modulieren eines optischen Signals verwendet wird, die eine Regelungsschleife umfaßt, die folgendes umfaßt:

   - einerseits eine Steuervorrichtung (4) gemäß einem der vorhergehenden Ansprüche, die am Eingang wenigstens einen Teil des vom Oszillator (13) modulierten optischen Signals empfängt, und
   - andererseits Mittel, welche die Frequenz des Oszillators abhängig vom Ausgangssignals des Photodetektors (6) der Steuervorrichtung korrigieren.

8. Hybrides Übertragungssystem, das Sendemittel (11), Mittel (12) zum Modulieren des Signals am Ausgang der Sendemittel (11), einen Oszillator (13) für die Erzeugung eines Mikrowellen- oder Millimeterfrequenzsignals für die Steuerung der Modulationsmittel (12), und eine Leitung mit einer optischen Faser umfaßt, über die das modulierte Signal übertragen wird, das eine Vorrichtung (4) gemäß Anspruch 7 für die Steuerung der Frequenz des Oszillators (13) umfaßt.

9. System für die Steuerung der Modulationsfrequenz eines optischen Signals, das zwei Steuervorrichtungen gemäß einem der Ansprüche 1 bis 7 umfaßt, die jeweils auf Steuerfrequenzen beiderseits der Modulationsfrequenz zentriert sind, die das System steuern soll, und das auch einen Differenzverstärker umfaßt, an dessen Eingänge die Ausgänge der Photodetektoren der beiden Steuervorrichtungen eingegeben werden.

10. Hybrides Übertragungssystem, das Sendemittel, Mittel zum Modulieren des Signals am Ausgang der Sendemittel, einen Oszillator für die Erzeugung eines Mikrowellen- oder Millimeterfrequenzsignals für die Steuerung der Modulationsmittel, und eine Leitung mit einer optischen Faser umfaßt, über die das modulierte Signal übertragen wird, das ein System nach Anspruch 9 für die Steuerung der Frequenz des Oszillators umfaßt.

# FIG.1

# FIG.2

*FIG.3*

EP 1 228 393 B1